Europäisches Patentamt

European Patent Office

Office européen des brevets

(19)

(11) EP 0 698 642 A1

(12) # DEMANDE DE BREVET EUROPEEN

(43) Date de publication:
28.02.1996 Bulletin 1996/09

(51) Int Cl.⁶: $C09C\ 1/48$

(21) Numéro de dépôt: 95401845.3

(22) Date de dépôt: 07.08.1995

(84) Etats contractants désignés:
DE GB IT NL

(30) Priorité: 22.08.1994 FR 9410236

(71) Demandeur: INSTITUT FRANCAIS DU PETROLE
F-92502 Rueil-Malmaison (FR)

(72) Inventeurs:
• Morlec, Jean
  F-44600 Saint Nazaire (FR)
• Hamon, Christian
  F-44600 Saint Nazaire (FR)

(74) Mandataire: Andreeff, François
  F-92502 Rueil-Malmaison (FR)

(54) **Procédé de production de noir de carbone par pyrolyse de déchets de caoutchouc préalablement broyés et déferaillés**

(57)   L'invention concerne un procédé de production de noir de carbone par pyrolyse de déchets de caoutchoucs préalablement broyés et déferraillés.

Dans ce procédé la pyrolyse est effectuée généralement en présence d'au moins un gaz choisi parmi la vapeur d'eau, le gaz carbonique, un gaz de combustion, un mélange de vapeur d'eau et d'au moins un gaz inerte.

EP 0 698 642 A1

Printed by Jouve (FR), 18, rue Saint-Denis, 75001 PARIS

**Description**

Le traitement ou la valorisation de déchets de caoutchouc, par exemple de pneus usagés, renfermant ou ne renfermant pas de métaux, à l'état métallisé éventuellement, et par exemple le cuivre, est un des soucis majeurs en matière d'environnement. Le coût de la mise en décharge, obligatoire, deviendra prohibitif dans les prochaines années. Par ailleurs, la place disponible sera de plus en plus réduite et réservée à ce que l'on appelle couramment les déchets ultimes. Il convient également de souligner le danger que représente le stockage de tels déchets (pneus par exemple) en tant que matière combustible et la nécessité de supprimer les décharges sauvages de pneumatiques que l'on rencontre fréquemment dans le paysage.

Il est donc impératif de trouver des solutions pour la transformation de ces caoutchoucs usagés. Celles-ci devront permettre de se débarrasser de ces matériaux encombrants et dangereux dans des conditions économiquement acceptables. S'il y a des métaux, il convient si possible d'éliminer les métaux, par exemple le cuivre de tels déchets.

Ce sujet a déjà été l'objet de diverses approches, certaines étant actuellement appliquées à l'échelle industrielle.

Les pneumatiques par exemple, ont un pouvoir calorifique élevé (8000 Kcal / kg soit 33472 KJ/kg) proche de celui du pétrole brut et la valorisation pour la production de calories est une des voies mises en oeuvre. Ceci peut se traduire dans certains pays par la production d'énergie électrique.

Toutefois, cette voie ne paraît pas être une solution d'avenir car l'utilisation des pneumatiques comme source d'énergie entraîne des investissements élevés avec une maîtrise plus complexe et donc une moins bonne régulation des températures au niveau des procédés, alors que ceux-ci exigent un contrôle de plus en plus précis.

L'autre voie de valorisation des pneumatiques ou caoutchouc peut se limiter au broyage pour la production de granulats (broyage mécanique) ou de poudrette (cryobroyage).

Ces procédés comprennent également une étape de déferraillage pour la séparation des métaux contenus. Les applications de ces produits sont diverses ; dans tous les cas, ils sont incorporés dans la fabrication de matériaux et plus particulièrement les dalles ou les bitumes pour les revêtements routiers ou sols sportifs.

Toutefois, cette voie connaît un développement limité et le marché potentiel ne pourra absorber qu'une faible part du gisement à valoriser.

Il convient donc de trouver d'autres voies de valorisation pour apporter des réponses crédibles à ce problème des pneumatiques usagés.

Ceci fait l'objet de l'invention décrite ci-après.

L'invention concerne un procédé de production de noir de carbone par pyrolyse de déchets de caoutchouc préalablement broyés et déferraillés.

La pyrolyse est généralement effectuée en présence d'au moins un gaz choisi parmi la vapeur d'eau, le gaz carbonique, un gaz de combustion, un mélange de vapeur d'eau et d'au moins un gaz inerte.

De préférence, les déchets de caoutchouc sont préalablement broyés et déferraillés se présentent sous l'aspect de granulats dont la granulométrie est comprise entre environ 2 et 5mm.

L'invention porte sur la production de noir de carbone par pyrolyse de déchets de caoutchouc (pneumatiques ou caoutchouc divers).

Par pyrolyse, on entend un traitement thermique sous atmosphère contrôlée composée d'un mélange d'au moins un gaz inerte (tel que $N_2$) et de vapeur d'eau. Comme nous le verrons plus loin, on peut, dans certains cas, se limiter à l'injection de vapeur d'eau ou de gaz carbonique ou d'un gaz de combustion (fumées de brûleur).

Dans le cadre de la présente invention, le traitement de pyrolyse est effectué de préférence en continu ou en batch dans un four tournant à chauffage indirect et à pression atmosphérique, par exemple un four tel que décrit dans EP-A-571251.

A l'échelle industrielle, le chauffage du four sera en totalité, ou tout du moins en grande partie, assuré par la combustion des gaz produits dans la pyrolyse des déchets de caoutchouc

Déchets → Noir de carbone + Gaz

Le gaz contient en particulier de l'hydrogène et des hydrocarbures divers.

Le four, ou zone de pyrolyse, est alimenté en continu par des déchets de caoutchouc préalablement broyés et déferraillés selon les techniques connues de l'homme de l'art. Ceux-ci sont généralement dénommés granulats. Leur granulométrie se situe préférentiellement environ entre 2 mm et 5 mm.

Le four qui peut être utilisé dans la présente invention est équipé de dispositifs divers ; en particulier, les joints entrée/sortie du four sont étanches afin d'éviter toute entrée d'air dans le four (four étanche aux gaz).

Le four est balayé à co ou à contre-courant des granulats de caoutchouc par au moins un gaz, par exemple un mélange d'un gaz inerte, de préférence $N_2$, et de vapeur d'eau, ou tout simplement par de la vapeur d'eau, ou du gaz carbonique, ou encore par un gaz de combustion (fumée de brûleur).

Les paramètres opératoires de cette réaction sont la température ou plutôt le profil de températures dans le four, le temps de séjour qui dépend entre autres de l'inclinaison du tube et de sa vitesse de rotation, la pression de vapeur d'eau à l'entrée du four et le débit d'entrée en granulats.

A la sortie du four, un dispositif permet de séparer le solide, c'est-à-dire le noir de carbone obtenu, du gaz.

Chaque lot de noir de carbone produit à différentes conditions opératoires correspond à un régime stationnaire et les caractéristiques du produit sont donc directement corrélables aux conditions opératoires. Par contre, la qualité du produit est indépendante de la composition de la charge d'entrée. Le procédé selon l'invention présente ainsi l'avantage de s'affranchir de la composition de la charge d'entrée.

Chaque lot est caractérisé par des méthodes normalisées indiquées ci-après à savoir en particulier la surface spécifique selon la méthode BET, l'indice d'adsorption d'iode [NF ISO 1304 (g/kg)], l'indice d'adsorption de phtalate de dibutyle, les teneurs en cendres et charges minérales [NF ISO 4656-1 ($10^{-5}$ $m^3$/kg)].

On opère dans une gamme de température comprise entre environ 600 et 1100°C et le produit recueilli sort de la zone de pyrolyse entre environ 150 et 350°C (voire entre 160 et 300°C).

Les exemples ci-après regroupent certains des résultats obtenus qui nous paraissent représentatifs des possibilités qu'offre cette nouvelle technologie.

Teneur en $H_2O$ : elle est exprimée en pression partielle en mm Hg, le gaz porteur étant l'azote. Pour une pression d'eau à pression atmosphérique, il s'agit d'injection d'eau sans introduction de gaz inerte notamment (azote).

Le rendement matière est le rapport entre les débits de pyrolysats en sortie et de granulats à l'entrée du four.

Ces résultats montrent clairement qu'il est possible d'obtenir à partir de déchets de caoutchouc, par pyrolyse, sous atmosphère chargée en vapeur d'eau, en four continu rotatif étanche ou en batch en four rotatif étanche, des noirs de carbone ayant des spécifications comparables aux noirs de carbone disponibles sur le marché. Ceci vaut entre autres pour la surface spécifique, l'indice d'adsorption d'iode et de phtalate de dibutyle.

Par contre, il convient de relever, et ceci est logique, que la teneur en charges minérales est plus élevée car les produits minéraux contenus dans les déchets de caoutchouc se retrouvent bien entendu dans le pyrolysat.

Ces produits comportant des charges minérales classiques qui sont couramment introduits dans les formulations de caoutchouc pourraient donc ne pas gêner l'utilisation industrielle de ces noirs de carbone dans la fabrication de matériaux à base de caoutchouc.

Une autre caractéristique majeure de l'invention porte sur les traitements complémentaires que l'on peut, si nécessaire, effectuer sur les pyrolysats afin d'abaisser la teneur en charges minérales ainsi qu'en soufre. Un de ces traitements est l'affinage du pyrolysat, notamment par tri.

Ceci consiste à faire subir au noir provenant de la pyrolyse un traitement acide dans des conditions que l'on peut adapter aux objectifs visés quant aux teneurs respectives en métaux, oxydes et soufre.

Nous avons pour cela réaliser un certain nombre d'expériences et nous donnons à titre indicatif quelques uns des résultats obtenus.

Il est clair qu'il est possible d'abaisser fortement le résidu minéral ainsi que la teneur en soufre. Les conditions opératoires peuvent bien entendu être adaptées selon les techniques connues de l'homme de l'art (nature acide, concentration, temps) et permettre d'obtenir si nécessaire des spécifications plus pointues.

La composition du gaz est fixée à l'entrée du four. Le temps de séjour est compris entre 15 et 200 minutes, de préférence entre 25 et 75 minutes, de façon à pouvoir obtenir une composition de gaz constante à la sortie du four, donc il faut un temps de séjour suffisamment long pour que les équilibres puissent être atteints (correspondent aux conditions opératoires).

La valeur du temps de séjour s'étend lorsque la température requise dans la zone de pyrolyse (four) est atteinte. La montée en température n'est comptée qu'à partir du moment où le minimum de la fourchette (600 à 1150°C) de température indiquée plus haut est atteint.

La température est une moyenne de températures relevées dans le four. Par temps de séjour, on entend le temps de résidence dans la zone centrale du four corespondant à environ la moitié de la longueur du four où l'écart de température entre les extrêmes ne dépasse pas 50° C. Il est clair que le produit subit également un traitement thermique dans les phases de montée en température de l'ambiante jusqu'au point de consigne affiché à l'entrée du four et dans les phases de refroidissement dû aux pertes thermiques avec l'extérieur. Le produit sort du four à une température qui selon les valeurs de la zone centrale (600° à 1150° C) est comprise entre 150 et 350° C.

Le rapport massique $H_2O$ / granulats (indicatif de débit) est compris entre 0,1 et 10, de préférence entre 0,5 et 5, (débit de vapeur d'eau généralement compris entre 50 et 1000 litres pour 100 grammes traités de déchets de caoutchouc).

La pression de vapeur d'eau à l'entrée de la zone de pyrolyse (il s'agit de l'eau pure, sous forme de vapeur d'eau, et non de l'eau formée in situ) est comprise entre 100 mm et 760 mm de mercure (soit 0,1 atmosphère à 1 atmosphère ou 1,33 x $10^4$ à $10^5$ Pascal). Le complément à la pression atmosphérique, lorsque $PH_2O$ n'atteint pas un atmosphère, étant obtenu par dilution avec au moins un gaz choisi dans le groupe constitué par les gaz inertes (azote, argon, krypton) par le gaz carbonique ou par tout autre gaz (gaz de combustion par exemple). Si ce dernier gaz contient de la vapeur d'eau, cette vapeur d'eau n'est pas comptabilisée dans la teneur en vapeur d'eau indiquée ci-dessus.

## EXEMPLE 1

On se propose de traiter dans un four tournant de pyrolyse qui fonctionne à alimentation électrique et en continu, 300 grammes de déchets de caoutchouc déferraillés, donc démétallisés, dont la granulométrie est comprise entre 2 et 5 mm. La température moyenne du four est de 800° C et le temps de séjour 60 minutes. Le temps de séjour correspond à la zone centrale du four représentant environ 50 % de la longueur totale et correspondant à une zone où la différence Δt° est inférieure à 30° C.

Le four est balayé par de la vapeur d'eau diluée par un gaz inerte, qui ici est l'azote. On introduit donc en tout dans le four 300 grammes de déchets de caoutchouc.

La pression à l'entrée du four est 570 mm de mercure ($5,7._{10}^4$ Pa). Le débit de vapeur d'eau est de 75 l/h (soit 56 g/h de vapeur d'eau) donc le rapport débit de vapeur d'eau sur débit de déchet est de 0,19 (massique). Dans ces conditons, le rendement pondérale en noir de carbone est de 34 % (entrée/sortie) et les caractéristiques du produit obtenu sont:
BET: 270 m²/g.
Indice d'iode : 233 (en mg d'iode par gramme de noir de carbone)
DBP (indice d'adsorption de phtalate de dibutyle) : 224 millilitres pour 100 grammes de noir de carbone.

## EXEMPLE 2

On se propose maintenant de traiter dans un four tournant de pyrolyse qui fonctionne à alimentation électrique et en continu, 300 grammes de déchets de caoutchouc déferraillés, donc démétallisés, dont la granulométrie est comprise entre 2 et 5 mm. La température moyenne du four est de 700° C et le temps de séjour 60 minutes. Le temps de séjour correspond à la zone centrale du four représentant environ 50 % de la longueur totale et correspondant à une zone où la différence Δt est inférieure à 30° C.

Le four est balayé par de la vapeur d'eau diluée par un gaz inerte, qui ici est l'azote. On introduit donc en tout dans le four 300 grammes de déchets de caoutchouc.

La pression à l'entrée du four est 560 mm de mercure ($5,6_{10}^4$ Pa). Le débit de vapeur d'eau est de 75 l/h (soit 56 g/h de vapeur d'eau) donc le rapport débit de vapeur d'eau sur débit de déchet est de 0,19 (massique). Dans ces conditons, le rendement pondérale en noir de carbonne est de 38 % (entrée/sortie) et les caractéristiques du produit obtenu sont:
BET: 91 m² /g.
Indice d'iode: 114 (en mg d'iode par gramme de noir de carbone)
DBP (indice d'adsorption de phtalate de dibutyle): 110 millilitres pour 100 grammes de noir de carbonne.

## EXEMPLE 3

On se propose de traiter dans un four tournant de pyrolyse qui fonctionne à alimentation électrique et en continu, 300 grammes de déchets de caoutchouc déferraillés, donc démétallisés, dont la granulométrie est comprise entre 2 et 5 mm. La température moyenne du four est de 950° C et le temps de séjour 60 minutes. Le temps de séjour correspond à la zone centrale du four représentant environ 50 % de la longueur totale et correspondant à une zone où la différence Δt° est inférieure à 30° C.

Le four est balayé par de la vapeur d'eau. On introduit donc en tout dans le four 300 grammes de déchets de caoutchouc.

La pression à l'entrée du four est 760 mm de mercure ($7,6 ._{10}^4$ Pa). Le débit de vapeur d'eau est de 394 litres par heures (soit 300 grammes par heure de vapeur d'eau) donc le rapport débit de vapeur d'eau sur débit de déchet est de 1 (massique). Dans ces conditons, le rendement pondérale en noir de carbone est de 21 % (entrée/sortie) et les caractéristiques du produit obtenu sont:
BET: 720 m(2) par grammes.
Indice d'iode : 664 (en mg d'iode par gramme de noir de carbone)
DBP (indice d'adsorption de phtalate de dibutyle) : 222 millilitres pour 100 grammes de noir de carbone.

A titre d'information on peut comparer les bonnes valeurs obtenues pour l'indice d'iode et le DPB avec les valeurs que l'on observe pour un noir de carbone commercial vierge de type ISAF (Intermediate Super Abrasion): 121 (indice d'iode) 114 (DBP)

## Revendications

**1 -** Procédé de production de noir de carbone par pyrolyse de déchets de caoutchouc préalablement broyés et déferraillés dans lequel la pyrolyse est effectuée en présence d'au moins un gaz choisi parmi la vapeur d'eau, le gaz carbonique, un gaz de combustion, un mélange de vapeur d'eau et d'au moins un gaz inerte.

**2 -** Procédé selon la revendication 1 effectué dans un four tournant à chauffage indirect.

**3 -** Procédé selon l'une des revendications 1 et 2 dans lequel les déchets de caoutchouc préalablement broyés et déferraillés se présentent sous l'aspect de granulats dont la granulométrie est comprise entre environ 2 et 5 mm.

**4 -** Procédé selon l'une des revendications 1 à 3 dans lequel on opère dans la zone de pyrolyse entre environ 600 et 1100° C, le produit étant recueilli à une température comprise entre environ 150 et 350° C

**5 -** Procédé selon l'une des revendications 1 à 4 dans lequel ledit gaz est un mélange d'au moins un gaz inerte et de vapeur d'eau.

**6 -** Procédé selon la revendication 5 dans lequel le gaz inerte est de l'azote.

**7 -** Procédé selon l'une des revendications 1 à 6 dans lequel le temps de séjour est compris entre 15 secondes et 200 minutes.

**8 -** Procédé selon l'une des revendications 1 à 7 dans lequel le rapport massique $H_2O$/granulats est compris entre 0,1 et 10.

**9 -** Procédé selon l'une des revendications 1 à 8 dans lequel la pression de vapeur d'eau à l'entrée de la zone de pyrolyse est comprise entre $1,33\ 10^4$ et $10^5$ Pascal), le complément à la pression atmosphérique, lorsque $pH_2O$ n'atteint pas $10^5$ Pascal, étant obtenu par dilution avec au moins un gaz choisi dans le groupe constitué par les gaz inertes (azote, argon, krypton) par le gaz carbonique ou par tout autre gaz.

**Office européen des brevets**

# RAPPORT DE RECHERCHE EUROPEENNE

Numero de la demande

EP 95 40 1845

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR-A-2 392 803 (LETSCH W.) <br> * page 5, ligne 14 - page 6, ligne 21 * <br> --- | 1 | C09C1/48 |
| X | US-A-3 966 487 (GRANT CRANE ET AL.) <br> * colonne 1, ligne 37 - ligne 45 * <br> * colonne 2, ligne 14 - ligne 17 * <br> * revendications 1,2 * <br> --- | 1,2 | |
| X | DE-A-19 39 715 (ZEPLICHAL F.) <br> * page 2, ligne 6 - ligne 14; revendication 1 * <br> --- | 1 | |
| X | EP-A-0 070 040 (INTENCO) <br> * page 5, dernier alinéa * <br> * page 7, ligne 3 - ligne 11 * <br> ----- | 1 | |
| | | | **DOMAINES TECHNIQUES RECHERCHES (Int.Cl.6)** |
| | | | C09C |

Le présent rapport a été établi pour toutes les revendications

| Lieu de la recherche | Date d'achèvement de la recherche | Examinateur |
|---|---|---|
| LA HAYE | 29 Septembre 1995 | Van Bellingen, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)